# EUROPÄISCHE PATENTSCHRIFT

(11) **EP 3 330 213 B1**
(45) Veröffentlichungstag und Bekanntmachung des Hinweises auf die Patenterteilung: **24.04.2019**
(21) Anmeldenummer: 17204907.4
(22) Anmeldetag: 01.12.2017
(51) Int. Cl.: B66F 3/35, B64F 1/22

(54) **FLUGZEUG-HEBEKISSEN MIT EINEM OBERKISSEN UND EINEM BASISKISSEN**
AIRCRAFT LIFT PAD WITH A TOP PAD AND A BASE PAD
COUSSIN DE LEVAGE D'AVION POURVU D'UN COUSSIN SUPÉRIEUR ET D'UN COUSSIN DE BASE

(30) Priorität: 02.12.2016 DE 202016106728 U
(43) Veröffentlichungstag der Anmeldung: 06.06.2018
(73) Patentinhaber: Vetter GmbH, 53909 Zülpich (DE)
(72) Erfinder: KÖLSCH, Harald, 53881 Euskirchen (DE)
(74) Vertreter: Patentanwälte Bauer Vorberg Kayser

(56) Entgegenhaltungen:
- CN-U- 201 942 473
- DE-A1-102011 118 758
- FR-A1- 2 926 821
- GB-A- 2 145 916

## Beschreibung

Die Erfindung bezieht sich auf ein Flugzeug-Hebekissen mit mindestens einem Oberkissen und mindestens einem Basiskissen nach dem Oberbegriff des Patentanspruchs 1. Ein derartiges Hebekissen ist aus DE 10 2011 118 758 A1 bekannt.

Aus US 4,061,310 A ist ein Flugzeug Hebekissen bekannt, das lediglich aus zwei Oberkissen besteht. Beim praktischen Einsatz hat es sich als vorteilhaft erwiesen, unterhalb der Oberkissen eine Basisstruktur anzuordnen. Hierfür hat man zunächst mechanische Strukturen aus starren Teilen wie Platten, Paletten oder andere feste Tragstrukturen verwendet. Es hat sich jedoch herausgestellt, dass im Einsatzfall der Aufbau einer derartigen mechanischen Basisstruktur zeitraubend ist und einen erheblichen körperlichen Einsatz der Einsatzkräfte erfordert. Während die Oberkissen relativ leicht sind und einfach gehandhabt werden können, ist ein Aufbau einer derartigen Basisstruktur aufwendig.

Hebekissen zum Anheben von Lasten sind grundsätzlich bekannt. Die aus der WO 9426649 A1 vorbekannten Hebekissen haben ein Abstandsfadengewebe. Sie haben eine Kammer, die jeweils aus zwei Hauptflächen und diese verbindenden Seitenwänden besteht. Die Hauptflächen sind nicht in unmittelbarem Kontakt miteinander, sondern durch die Seitenwände beanstandet. Dagegen ist das aus der DE 10 2010 062 409 A1 bekannte Hebekissen ohne Seitenwände ausgebildet. Derartige Hebekissen ohne Seitenwände sind nicht Gegenstand der vorliegenden Erfindung. Hebekissen ohne Seitenwände ähneln in der Form einem Sofakissen. Hebekissen, wie sie die Erfindung einsetzt, ähneln dagegen eher einer Matratze bzw. einem Quader. Sie können auch andere Form annehmen, beispielsweise Zylinderform. Typisch ist das Vorhandensein von Seitenwänden, die sich über die Höhe des aufgeblasenen Hebekissens erstrecken.

Flugzeug-Hebekissen werden benötigt, wenn ein Flugzeug von der festen Rollbahn oder anderen festen Rollwegen abgekommen ist oder sich aus anderen Gründen nicht auf einem festen Untergrund befindet. Mit eigener Kraft kommt ein Flugzeug, das beispielsweise in eine Grasfläche hinein gerollt ist, nicht mehr aus dieser heraus. Mittels eines Flugzeug-Hebekissens kann das Flugzeug so weit angehoben werden, dass festes Material unter die Räder geschoben werden und das Flugzeug wieder auf festen Boden bewegt werden kann. Zumeist werden mehrere Hebekissen eingesetzt, die das Flugzeug an mehreren Stellen anheben.

Während der Zeit, in der sich ein Flugzeug auf weichem Untergrund befindet, ist ein Flughafen normalerweise aus Sicherheitsgründen gesperrt. Ein Flughafen ist jedoch sehr daran interessiert und hat den Wunsch, die Unterbrechung des Flugverkehrs möglichst kurz zu halten, also das havarierte Flugzeug möglichst schnell zu bergen. Hier spielen auch kommerzielle Interessen des Flughafenbetreibers eine Rolle, denn während der Sperrzeit des Flughafens nimmt dieser keine Gebühren ein.

Aufgabe der Erfindung ist es, ein Flugzeug-Hebekissen weiter zu entwickeln, insbesondere die Basistruktur zu verbessern, sodass ein möglichst rascher Transport zum Einsatzort und ein möglichst rascher Einsatz vor Ort ohne intensive körperliche Tätigkeit und mit Anheben des Flugzeugs möglich sind.

Diese Aufgabe wird gelöst durch ein Flugzeug-Hebekissen nach Anspruch 1.

Hebekissen eignen sich gut als Basisstruktur. Im Vergleich zu einer mechanischen Basisstruktur aus Holzplatten, Paletten oder dergleichen haben sie den Vorteil eines deutlich geringeren Gewichtes. Eine derartige Basistruktur kann von einer einzelnen Einsatzkraft gehandhabt werden. Sie hat daher im praktischen Einsatz erhebliche Vorteile.

Vorzugsweise sind die beiden Hauptflächen durch Abstandsfäden miteinander verbunden. Aufgrund des Abstandsfadengewebes im Inneren der Hebekissen wird im aufgeblasenen Zustand eine gleichmäßige Höhe erreicht. Die Hauptflächenbeulen beim Aufblasen nicht aus.

Das Basiskissen ist modular aus mindestens zwei Kissengruppen aufgebaut. Eine Kissengruppe weist mindestens ein Einzelkissen, vorzugsweise aber mehrere Einzelkissen auf. Die Kissengruppen sind durch ihre jeweiligen Verbindungsmittel mechanisch fest zu einer Einheit verbunden. Sie sind damit gleichwirkend einem stabilen Gerüst, das mechanisch hergestellt ist. Aufgrund der Verbindungsmittel sind die Kissengruppen exakt übereinander positioniert, sie können sich nur begrenzt gegeneinander verschieben, ein derartiges Verschieben ist begrenzt auf wenige Zentimeter in der Horizontalen, zumindest auf maximal 20 cm.

Die Verbindungsmittel zweier benachbarter Kissengruppen können mithilfe ihrer Kupplungsstücke und Kupplungsgegenstücke rasch und bequem miteinander verbunden und ebenso gelöst werden. Vorzugsweise eignen sich als Verbindungsmittel 3-Punkt Sicherheitsgurte aus Kraftfahrzeugen. Sie haben ein Kupplungsstück, von dem ein Beckengurt und ein Schultergurt ausgehen, sowie ein zugehöriges Kupplungsgegenstück, das flach und etwa zungenförmig ausgebildet ist. Diese aus einem Kraftfahrzeug stammenden Teile lassen sich bekanntlich leicht zusammenfügen und ebenso leicht lösen. Für die Verwendung im Basiskissen werden nur ein kurzer Beckengurt und nur ein kurzer Schultergurt benötigt. An einem von ihnen wird das Kupplungsgegenstück am Ende befestigt, der andere Gurt wird mit dem Einzelkissen, insbesondere einer Hauptfläche, verbunden. Derartige Verbindungsmittel können eine erhebliche Last aufnehmen, diese liegt im Bereich bis zu einigen Tonnen Zugkraft, wie sie beispielsweise bei einem Auffahrunfall auftritt. Gleiches gilt für die flexiblen Elemente, also das Gurtmaterial der Sicherheitsgurte. Derartige Kraftfahrzeugteile werden in großer Serie produziert und sind daher auf dem Markt gut und günstig zu erhalten. Durch Einbindung des Gurtmaterials in die Hauptflächen der Einzelkissen wird eine feste Verbindung zum Einzelkissen erreicht. Die flexiblen Teile der Elemente und ragen aus den Hauptflächen hervor. Die Elemente stehen dann parallel zur Hauptfläche vor und liegen an den Seitenflächen an.

Jedes Verbindungsmittel 38 hat zwei Elemente 40, 42, an einem ist das Kupplungsstück 44 angeordnet, es ist am Einzelkissen 26 befestigt. Das andere Element 42 erstreckt sich vom Kupplungsstück 44 zum Kupplungsgegenstück 46. Für die Verbindung mit einer darunter befindlichen Kissengruppe 22 wird das Kupplungsgegenstück 46 benutzt, für die Verbindung mit der darüber befindlichen Kissengruppe wird das Kupplungsstück 44 benutzt. Andere Anordnungen sind möglich. In einer Ausführungsform, die nur mit zwei Kissengruppen arbeitet, ist für die eine Kissengruppe 22 nur ein Element mit Kupplungsstück 44 und für die andere Kissengruppe 24 nur ein Element mit Kupplungsgegenstück 46 nötig. In einer anderen Ausbildung können Kupplungsstück und Kupplungsgegenstück auch durch Karabinerhaken, Schnallen, durch einen Klettverschluss oder dergleichen ausgeführt sein.

Wenn benachbarte Kissengruppen 22, 24 durch Kupplungsteile 44, 46 miteinander verbunden sind, sind die Elemente 40, 42 im Wesentlichen straff. Zumindest ein Element 42 ist im Wesentlichen straff. Vorzugsweise sind mehrere Verbindungsmittel 38 entlang der Seitenwände 32 angeordnet. Sie sind so angeordnet, dass ein Verschieben einer Kissengruppe 22 gegenüber einer anderen in allen Horizontalrichtungen, also in der x-y-Ebene definiert begrenzt wird. Die Einzelkissen 26 nehmen im Wesentlichen die Kräfte in vertikaler Richtung auf, während in horizontaler Richtung wirkende Kräfte zumindest teilweise durch die Verbindungsmittel 38 aufgenommen werden.

Das Oberkissen 54 ist nach dem Stand der Technik ausgebildet, beispielsweise wie aus der genannten US 4,061,310 A bekannt ist. Das Oberkissen 54 befindet sich unmittelbar oberhalb einer Kissengruppe 24 des Basiskissens 20, nämlich der höchsten Kissengruppe. Das Oberkissen 54 besteht in der Regel aus einer Vielzahl einzelner Kissen. Diese Einzelkissen des Oberkissens 54 können mit einem Abstandsfadengewebe aus gerüstet sein, sie sind normalerweise nicht mit Abstandsfadengewebe ausgestattet.

Die Aufteilung einer Kissengruppe 22, 24 in Einzelkissen hat sich bewährt. Wenn man eine Kissengruppe nur aus einem Einzelkissen herstellt, muss dieses einen großen Hubweg, beispielsweise 60 cm, aufweisen. Ein solches Kissen hat jedoch in horizontaler Richtung eine gewisse Instabilität, zumindest beim Aufblasen. Für die Erfindung werden bevorzugt mehrere Einzelkissen 26 mit einem maximalen Hubweg von jeweils 30, insbesondere von jeweils bis zu 20 cm eingesetzt, die dann gemeinsam den gewünschten Hubweg von zum Beispiel 60 cm realisieren. Bei dieser Lösung ist die horizontale Weichheit deutlich geringer, sodass vom Flugzeug kommende, seitlich wirkende Kräfte besser abgefangen werden können. Dies gilt auch für die Aufteilung des Basiskissens 20 in einzelne Kissengruppen 22, 24. Es können insgesamt große Hubwege erreicht werden, obwohl jedes einzelne Kissen nur einen Hubweg von beispielsweise 20 cm hat. Bei drei Kissengruppen mit jeweils drei Einzelkissen 26, die jeweils 20 cm Hubweg haben, wird insgesamt ein Hubweg von 180 cm erreicht. Ein derartiges Basiskissen 20 ist immer noch ausgesprochen leicht und bequem zu handhaben. Hier macht sich zudem vorteilhaft bemerkbar, dass lediglich die einzelnen Kissengruppen 22, 24 gehandhabt werden müssen, sie können vor Ort rasch über die Kupplungsteile 44, 46 miteinander verbunden werden.

Vorzugsweise hat jede Kissengruppe mindestens zwei und vorzugsweise drei Einzelkissen. Die Einzelkissen jeder Kissengruppe weisen vorzugsweise zwei gegenüberliegende Hauptflächen auf. Benachbarte Einzelkissen sind vorzugsweise mit ihren Hauptflächen in Kontakt. Vorzugsweise sind ihre Hauptflächen miteinander verbunden, dies kann lösbar sein oder sie können fest miteinander verbunden sein. Die Einzelkissen jeder Kissengruppe weisen vorzugsweise Hauptflächen gleicher Abmessungen auf. Vorzugsweise haben die Einzelkissen eine gleiche Höhe im aufgeblasenen Zustand.

Die Elemente weisen jeweils einen fixierten Bereich und einen freien Bereich auf, der fixierte Bereich ist vorzugsweise mit einer Hauptfläche verbunden, der freie Bereich springt aus der Ebene der Hauptfläche vor und kann ergriffen werden. Zumindest eines der beiden Elemente eines Verbindungsmittels hat vorzugsweise eine mittels eines Einstellstücks veränderbare Gesamtlänge. Dadurch kann die Länge des freien Bereichs so eingestellt werden, dass im aufgeblasenen Zustand die Elemente straff oder im Wesentlichen straff sind.

Zwischen zwei benachbarten Kissengruppen befindet sich vorzugsweise ein Gleitmittel. Es kann beispielsweise ein Tuch oder eine Plane zwischengelegt werden. Dadurch ist eine Verschiebung einzelner Kissengruppen gegeneinander möglich, diese Verschiebbarkeit ist aber begrenzt. Die Verschiebbarkeit soll insbesondere genutzt werden, um die Kissengruppen lotrecht übereinander positionieren zu können. Die Hauptflächen der Einzelkissen sind vorzugsweise rechteckförmig, insbesondere quadratisch.. Die benachbarten Hauptflächen sollen möglichst vollflächigen Kontakt haben, wenn zwei Kissengruppen übereinander liegen.

Die Einzelkissen haben jeweils eine in der Ebene der Hauptflächen liegende Breite und Tiefe, die mindestens fünfmal, vorzugsweise mindestens zehnmal so groß ist wie die Höhe eines Einzelkissens. Aufgrund der großen Breite und Tiefe des Einzelkissens wird ein mögliches Verkippen des Basiskissens erschwert. Jede Kissengruppe weist vorzugsweise eine Vielzahl von Verbindungsmitteln auf.

Jeweils ein Verbindungsmittel einer Kissengruppe befindet sich im aufgebauten Zustand der Kissengruppen oberhalb jeweils eines Verbindungsmittels der darunter befindlichen Kissengruppe. Jedes Einzelkissen hat zwei Hauptflächen und Seitenwände, wobei die Seitenwände die Hauptflächen miteinander verbinden.

Weitere Vorteile und Merkmale der Erfindung ergeben sich aus den sonstigen Ansprüchen sowie der nun folgenden Beschreibung von zwei nicht einschränkend zu verstehenden Ausführungsbeispielen der Erfindung, die im Folgenden anhand der Zeichnung näher erläutert werden. In der Zeichnung zeigen:
- Fig.1: eine perspektivische Ansicht eines Basiskissens mit zwei Kissengruppen im Zustand Aufbringens einer oberen Kissengruppe auf eine untere Kissengruppe, und
- Fig. 2: eine Frontansicht eines Flugzeug-Hebekissens mit einem dadurch angehobenen, teilweise dargestellten Flugzeug.

Für die Beschreibung wird ein rechtshändiges x-y-z-Koordinatensystem verwendet. Die x-y-Ebene ist die Horizontalebene, die z-Richtung geht senkrecht nach oben.

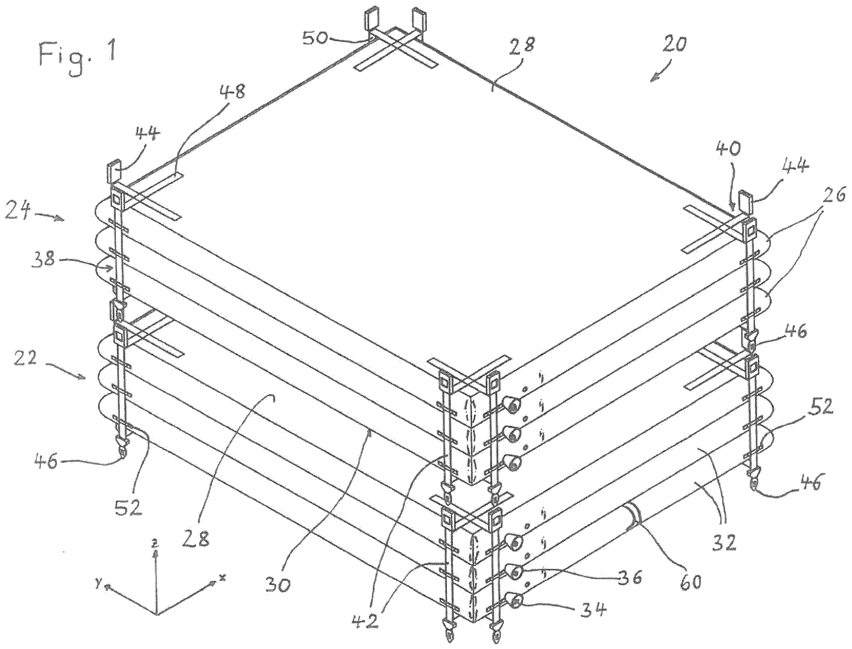

Figur 1 zeigt ein Basiskissen 20, das zwei Kissengruppen 22, 24 aufweist. Diese sind in Figur 1 nicht in Kontakt miteinander, gezeigt ist vielmehr ein Abstand zwischen den beiden Kissengruppen 22, 24 in z-Richtung. Ein solcher Abstand tritt auf, wenn die zweite, obere Kissengruppe 24 von der unteren abgehoben wird oder auf sie aufgesetzt wird.

Jede der beiden Kissengruppen 22, 24 in Figur 1 hat drei baugleiche Einzelkissen 26. Die Einzelkissen 26 der beiden Kissengruppen 22, 24 sind im Ausführungsbeispiel baugleich. Die Einzelkissen 26 haben jeweils eine obere Hauptfläche 28 und eine untere Hauptfläche 30, diese sind rechteckförmig. Sie erstrecken sich in der x-y- Ebene. Sie haben eine Breite, die in x-Richtung verläuft und eine Tiefe, die in y-Richtung verläuft. Weiterhin hat jedes Einzelkissen 26 vier Seitenwände 32. Zwischen den Hauptflächen 28, 30 befinden sich hier nicht dargestellte, aber aus dem Stand der Technik bekannte Abstandsfäden, dadurch sind die Hauptflächen 28 ,30 eben. Die Abstandsfäden verlaufen in z-Richtung diese Richtung ist die Richtung der Höhe des Einzelkissens 26.

Die Seitenwände 32 sind nach außen wulstförmig ausgebeult, dies aufgrund des Innendrucks in den jeweiligen Einzelkissen 26. Die Einzelkissen 26 sind aus einem flexiblen, gummiartigen Flachmaterial hergestellt. Die Einzelkissen 26 weisen jeweils ein Ventil 34 auf, über das sie mit Luft gefüllt werden können. Das Ventil 34 ist von einem Schutzkragen 36 umgeben, dieser ist beispielsweise auch aus Gummimaterial gefertigt. Vorzugsweise liegen die Ventile 34 zumindest einer Kissengruppe übereinander, in der Ausführung liegen alle Ventile 34 in z-Richtung übereinander, dadurch ist das Anschließen von Schläuchen vereinfacht.

Jede Kissengruppe 22, 24 hat acht Verbindungsmittel 38, die über den Umfang verteilt sind. Sie befinden sich außerhalb der Hauptflächen 28, 30. Die Verbindungsmittel weisen jeweils ein erstes Element 40 und ein zweites Element 42 auf. Das erste Element hat ein Kupplungsstück 44 an seinem freien Ende, das zweite Element beginnt am Kupplungsstück 44 und hat ein Kupplungsgegenstück 46 an seinem freien Ende. Das 1. Element 40 hat einen fixierten Bereich 48. Dort ist es mit der oberen Hauptfläche 28 verbunden, es erstreckt sich in einer so ausreichenden Länge parallel zur oberen Hauptfläche 28, dass eine gute Verbindung und zugfeste Anbindung erreicht wird. Der fixierte Bereich 48 ist beispielsweise verklebt, vernäht oder anderweitig mit der oberen Hauptfläche 28 verbunden. An den fixierten Bereich 48 schließt sich ein relativ kurzer, nur zwei bis zehn Zentimeter langer freier Bereich 50 an, der bis zum Kupplungsstück 44 reicht. Von dort geht er einstückig über in das 2. Element 40, das in Figur vertikal nach unten verläuft. An den Seitenwänden sind Laschen befestigt, die das 2. Element 42 führen und übergreifen. Sie verhindern ein Verschieben quer zur z-Richtung.

Die drei Einzelkissen 26 jeder Kissengruppe 22, 24 sind in z-Richtung exakt übereinander positioniert. Die jeweilig sich kontaktierenden Hauptflächen 28, 30 sind miteinander verklebt.

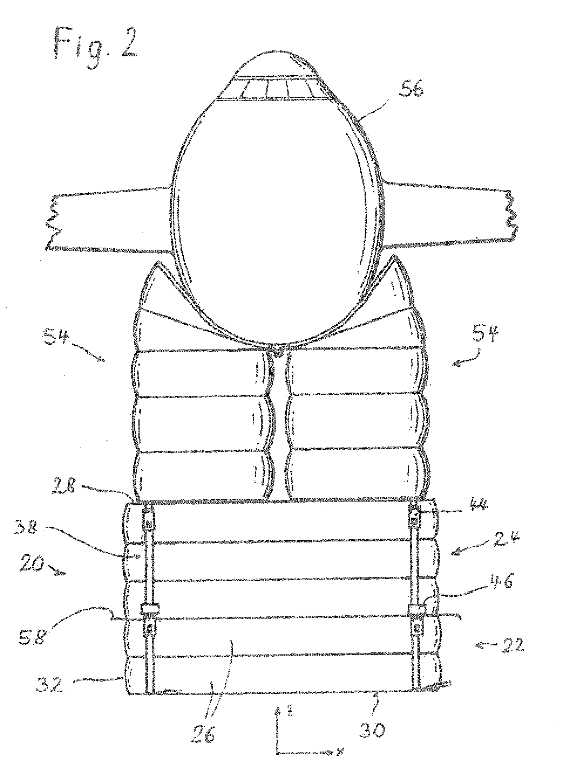

Figur 2 zeigt den Einsatz eines derartigen Basiskissens 20 für das Anheben eines Flugzeugs 56. Das Basiskissen 20 befindet sich unterhalb eines Oberkissens 54. Beide sind aus einzelnen luftdichten Kammern aufgebaut. Das Oberkissen 54 ist in Anlage an einem Flugzeug 56. Es hebt einen Teil des Rumpfes an. Für ein komplettes Heben des Flugzeugs sind weitere Flugzeug-Hebekissen an anderen Stellen des Flugzeugs vorgesehen.

Die 1. Kissengruppe 22 hat zwei Einzelkissen 26. Die 2. Kissengruppe 24 hat drei Einzelkissen 26. Zwischen den beiden Kissengruppen 22, 24 befindet sich ein Gleitmittel 58 in Form eines Gummituchs.

Die Einzelkissen 26 sind beispielsweise für einen Druck von einem bar ausgelegt. Höhere Druckwerte, zum Beispiel 2-8 bar, sind möglich. Vorzugsweise haben die Einzelkissen 26 eine Kennzeichnung 60. Sie befindet sich zum Beispiel auf einer und nur einer Seitenwand 32. Im korrekt zusammengefügten Zustand befinden sich die Markierungen 60 in z-Richtung übereinander.

Das Flugzeug-Hebekissen hat mindestens ein Oberkissen 54 und mindestens ein Basiskissen 20, die beide jeweils als Hebekissen ausgebildet sind und luftdichte Kammern aufweisen. Die Kammern haben einen mit Luft füllbaren Innenraum, der über ein Ventil 34 zugänglich ist, und Wände aus flexiblem, gummiartigem Flachmaterial. Das Basiskissen 20 ist aus mindestens einer 1. und einer 2. Kissengruppe 22, 24 zusammengesetzt. Die 1. Kissengruppe 22 befindet sich im Einsatz unterhalb der 2. Kissengruppe 24. Jede Kissengruppe 22, 24 hat mindestens ein Einzelkissen 26. Jede Kissengruppe 22, 24 hat mindestens ein Verbindungsmittel 38, das ein erstes zugfestes, flexibles Element 40 mit einem Kupplungsstück 44 und ein zweites zugfestes, flexibles Element 42 mit einem Kupplungsgegenstück 46 aufweist. Kupplungsstück 44 und Kupplungsgegenstück 46 sind lösbar miteinander verbindbar.

Begriffe wie im Wesentlichen, vorzugsweise und dergleichen sowie möglicherweise als ungenau zu verstehende Angaben sind so zu verstehen, dass eine Abweichung um plusminus 5 %, vorzugsweise plusminus 2 % und insbesondere plus minus ein Prozent vom Normalwert möglich ist. Die Anmelderin behält sich vor, beliebige Merkmale und auch Untermerkmale aus den Ansprüchen und/oder beliebige Merkmale und auch Teilmerkmale aus einem Satz der Beschreibung in beliebiger Art mit anderen Merkmalen, Untermerkmalen oder Teilmerkmalen zu kombinieren, dies auch außerhalb der Merkmale unabhängiger Ansprüche.

### Bezugszeichenliste

- 20: Basiskissen
- 22: 1. Kissengruppe
- 24: 2. Kissengruppe
- 26: Einzelkissen
- 28: obere Hauptfläche
- 30: untere Hauptfläche
- 32: Seitenwand
- 34: Ventil
- 36: Schutzkragen
- 38: Verbindungsmittel
- 40: 1. Element
- 42: 2. Element
- 44: Kupplungsstück
- 46: Kupplungsgegenstück
- 48: fixierter Bereich
- 50: freier Bereich
- 52: Lasche
- 54: Oberkissen
- 56: Flugzeug
- 58: Gleitmittel
- 60: Kennzeichnung

## Patentansprüche

1. Flugzeug-Hebekissen mit mindestens einem Oberkissen (54) und mindestens einem Basiskissen (20), wobei die Kissen jeweils als Hebekissen ausgebildet sind und luftdichte Kammern aufweisen, die Kammern haben einen mit Luft füllbaren Innenraum, der über ein Ventil (34) zugänglich ist, und Wände aus flexiblem, gummiartigem Flachmaterial, dabei ist das Basiskissen (20) aus mindestens einer 1. und einer 2. Kissengruppe (22, 24) zusammengesetzt, die 1. Kissengruppe (22) befindet sich im Einsatz unterhalb der 2. Kissengruppe (24), jede Kissengruppe (22, 24) hat mindestens ein Einzelkissen (26), **dadurch gekennzeichnet, dass** jede Kissengruppe (22, 24) mindestens ein Verbindungsmittel (38) hat, das ein erstes zugfestes, flexibles Element (40) mit einem Kupplungsstück (44) und ein zweites zugfestes, flexibles Element (42) mit einem Kupplungsgegenstück (46) aufweist, Kupplungsstück (44) und Kupplungsgegenstück (46) sind lösbar miteinander verbindbar.

2. Flugzeug-Hebekissen nach Anspruch 1, **dadurch gekennzeichnet, dass** die Einzelkissen (26) aus Abstandsfadengewebe hergestellt sind und die Abstandsfäden quer zu zwei gegenüberliegenden Hauptflächen des Einzelkissens (26) verlaufen.

3. Flugzeug-Hebekissen nach einem der Ansprüche 1 und 2, **dadurch gekennzeichnet, dass** jede Kissengruppe (22, 24) mindestens zwei und vorzugsweise drei Einzelkissen (26) aufweist.

4. Flugzeug-Hebekissen nach Anspruch 3, **dadurch gekennzeichnet, dass** die Einzelkissen (26) jeder Kissengruppe (22, 24) zwei gegenüberliegende Hauptflächen (28, 30) aufweisen und benachbarte Einzelkissen (26) mit ihren Hauptflächen (28, 30) in Kontakt sind, vorzugsweise sind ihre benachbarten Hauptflächen (28, 30) miteinander verbunden.

5. Flugzeug-Hebekissen nach Anspruch 3 oder 4, **dadurch gekennzeichnet, dass** die Einzelkissen (26) jeder Kissengruppe (22, 24) Hauptflächen (28, 30) gleicher Abmessungen und vorzugsweise im aufgeblasenen Zustand auch gleicher Höhe aufweisen.

6. Flugzeug-Hebekissen nach einem der vorangegangenen Ansprüche, **dadurch gekennzeichnet, dass** mindestens ein Element (40) jeweils einen fixierten Bereich und einen freien Bereich aufweist, dass der fixierte Bereich mit einer Hauptfläche (28, 30) verbunden ist und dass der freie Bereich aus der Ebene der Hauptfläche (28, 30) vorspringt.

7. Flugzeug-Hebekissen nach einem der vorangegangenen Ansprüche, **dadurch gekennzeichnet, dass** zumindest eines der beiden Elemente (40, 42) eines Verbindungsmittels (38) eine mittels eines Einstellstücks veränderbare Gesamtlänge hat.

8. Flugzeug-Hebekissen nach einem der vorangegangenen Ansprüche, **dadurch gekennzeichnet, dass** sich zwischen zwei benachbarten Kissengruppen (22, 24) ein Gleitmittel (58), insbesondere ein Tuch oder eine Plane, befindet.

9. Flugzeug-Hebekissen nach einem der vorangegangenen Ansprüche, **dadurch gekennzeichnet, dass** die Hauptflächen (28, 30) der Einzelkissen (26) rechteckförmig, insbesondere quadratisch sind.

10. Flugzeug-Hebekissen nach einem der vorangegangenen Ansprüche, **dadurch gekennzeichnet, dass** das die Einzelkissen (26) jeweils eine in der Ebene der Hauptflächen (28, 30) liegende Breite und Tiefe haben, die mindestens fünfmal, vorzugsweise mindestens zehnmal so groß ist wie die Höhe eines Einzelkissens (26).

11. Flugzeug Hebekissen nach einem der vorangegangenen Ansprüche, **dadurch gekennzeichnet, dass** jede Kissengruppe (22, 24) eine Vielzahl von Verbindungsmitteln (38) aufweist, und dass jeweils ein Verbindungsmittel (38) einer Kissengruppe (24) im aufgebauten Zustand der Kissengruppen (22, 24) sich oberhalb jeweils eines Verbindungsmittels (38) der darunter befindlichen Kissengruppe (22) befindet.

12. Flugzeug Hebekissen nach einem der vorangegangenen Ansprüche, **dadurch gekennzeichnet, dass** jedes Einzelkissen (26) zwei Hauptflächen (28, 30) und Seitenwände hat, wobei die Seitenwände die Hauptflächen (28, 30) miteinander verbinden.

13. Flugzeug Hebekissen nach einem der vorangegangenen Ansprüche, **dadurch gekennzeichnet, dass** im aufgeblasenen Zustand benachbarter Kissengruppen und mit dem Kupplungsgegenstück (46) der einen Kissengruppe verbundenem Kupplungsstück (44) der anderen Kissengruppe die flexiblen Elemente gestrafft sind.

14. Flugzeug Hebekissen nach einem der vorangegangenen Ansprüche, **dadurch gekennzeichnet, dass** ein Seitenwänden (34) des Einzelkissen (26) (26) Laschen (52) befestigt sind, die ein Element (42, 44) aufnehmen und führen.

## Claims

1. An aircraft lifting pad with at least one top pad (54) and at least one base pad (20), wherein the pads are each configured as lifting pads and have air-tight chambers, the chambers have an inner space that can be filled with air and is accessible via a valve (34), and walls of a flexible, rubber-like flat material, at the same time, the base pad (20) is composed of at least one 1st and one 2nd pad group (22, 24), in use, the 1st pad group (22) is located underneath the 2nd pad group (24), each pad group (22, 24) has at least one single pad (26), **characterized in that** each pad group (22, 24) has at least one connecting means (38) that has a first flexible member (40) with tensile strength with a coupling part (44) and a second flexible member (46) with tensile strength with a coupling counter part (46), and the coupling part (44) and the coupling counterpart (46) can be detachably connected to each other.

2. The aircraft lifting pad according to claim 1, **characterized in that** the single pads (26) are made from a spacer-thread woven fabric and the spacer threads extend transversely to two opposite main surfaces of the single pad (26).

3. The aircraft lifting pad according to any one of the claims 1 and 2, **characterized in that** each pad group (22, 24) has at least two and preferably three single pads (26).

4. The aircraft lifting pad according to claim 3, **characterized in that** the single pads (26) of each pad group (22, 24) have two opposing main surfaces (28, 30), and adjacent single pads (26) are in contact with their main surfaces (28, 30), preferably, their adjacent main surfaces (28, 30) are connected to each other.

5. The aircraft lifting pad according to claim 3 or 4, **characterized in that** the single pads (26) of each pad group (22, 24) have main surfaces (28, 30) with identical dimensions and, in the inflated state, preferably the same height.

6. The aircraft lifting pad according to any one of the preceding claims, **characterized in that** at least one member (40) has one fixed region and one free region each, that the fixed region is connected to a main surface (28, 30), and that the free region protrudes from the plane of the main surface (28, 30).

7. The aircraft lifting pad according to any one of the preceding claims, **characterized in that** at least one of the two members (40, 42) of a connecting means (38) has a total length that can be altered by means of an adjusting part.

8. The aircraft lifting pad according to any one of the preceding claims, **characterized in that** a sliding means (58), in particular a cloth or tarpaulin, is located between two adjacent pad groups (22, 24).

9. The aircraft lifting pad according to any one of the preceding claims, **characterized in that** the main surfaces (28, 30) of the single pads (26) are rectangular, in particular square.

10. The aircraft lifting pad according to any one of the preceding claims, **characterized in that** the single pads (26) each have a width and depth, situated in the plane of the main surfaces (28, 30), which is at least five times, preferably at least ten times as large as the height of a single pad (26).

11. The aircraft lifting pad according to any one of the preceding claims, **characterized in that** each pad group (22, 24) has a plurality of connecting means (38), and that, in the assembled state of the pad groups (22, 24), one connecting means (38) of a pad group (24), respectively, is located above one connecting means (38) of the pad group (22), respectively, which is located thereunder.

12. The aircraft lifting pad according to any one of the preceding claims, **characterized in that** each single pad (26) has two main surfaces (28, 30) and side walls, wherein the side walls connect the main surfaces (28, 30) with each other.

13. The aircraft lifting pad according to any one of the preceding claims, **characterized in that**, in the inflated state of adjacent pad groups and with a coupling part (44) of the other pad group connected to the coupling counterpart (46) of the one pad group, the flexible members are taut.

14. The aircraft lifting pad according to any one of the preceding claims, **characterized in that** loops (52) accommodating and guiding a member (42, 44) are attached to side walls (34) of the single pad (26).

## Revendications

1. Coussin de levage d'aéronef comprenant au moins un coussin supérieur (54) et au moins un coussin de base (20), les coussins étant conçus chacun en tant que coussin de levage et présentant des chambres étanches à l'air, lesdites chambres ont un volume intérieur qui peut être rempli d'air et qui est accessible via une valve (34), et des parois en matériau plat flexible de type caoutchouc, le coussin de base (20) étant composé d'au moins un premier et un deuxième groupe de coussins (22, 24), le premier groupe de coussins (22) est situé en fonctionnement au-dessous du deuxième groupe de coussins (24), chaque groupe de coussins (22, 24) comprend au moins un coussin individuel (26), **caractérisé par le fait que** chaque groupe de coussins (22, 24) présente au moins un moyen de liaison (38) qui comprend un premier élément flexible (40) résistant à la traction et ayant une pièce de couplage (44) ainsi qu'un deuxième élément flexible (42) résistant à la traction et ayant une contre-pièce de couplage (46), ladite pièce de couplage (44) et ladite contre-pièce de couplage (46) peuvent être reliées de manière amovible l'une à l'autre.

2. Coussin de levage d'aéronef selon la revendication 1, **caractérisé par le fait que** les coussins individuels (26) sont réalisés à partir de tissu de fils d'écartement et que les fils d'écartement s'étendent transversalement à deux surfaces principales opposées du coussin individuel (26).

3. Coussin de levage d'aéronef selon l'une quelconque des revendications 1 et 2, **caractérisé par le fait que** chaque groupe de coussins (22, 24) comprend au moins deux et de préférence trois coussins individuels (26).

4. Coussin de levage d'aéronef selon la revendication 3, **caractérisé par le fait que** les coussins individuels (26) de chaque groupe de coussins (22, 24) présentent deux surfaces principales (28, 30) opposées et que des coussins individuels (26) voisins sont en contact entre eux par leurs surfaces principales (28, 30), de préférence leurs surfaces principales (28, 30) voisines sont reliées les unes aux autres.

5. Coussin de levage d'aéronef selon la revendication 3 ou 4, **caractérisé par le fait que** les coussins individuels (26) de chaque groupe de coussins (22, 24) présentent des surfaces principales (28, 30) de mêmes dimensions et de préférence, à l'état gonflé, de même hauteur.

6. Coussin de levage d'aéronef selon l'une quelconque des revendications précédentes, **caractérisé par le fait qu'**au moins un élément (40) présente respectivement une zone fixée et une zone libre, que ladite zone fixée est reliée à une surface principale (28, 30) et que ladite zone libre dépasse du plan de la surface principale (28, 30).

7. Coussin de levage d'aéronef selon l'une quelconque des revendications précédentes, **caractérisé par le fait que** l'un au moins des deux éléments (40, 42) d'un moyen de liaison (38) présente une longueur totale modifiable au moyen d'une pièce de réglage.

8. Coussin de levage d'aéronef selon l'une quelconque des revendications précédentes, **caractérisé par le fait qu'**un moyen de glissement (58), en particulier une toile ou une bâche, se trouve entre deux groupes de coussins (22, 24) voisins.

9. Coussin de levage d'aéronef selon l'une quelconque des revendications précédentes, **caractérisé par le fait que** les surfaces principales (28, 30) des coussins individuels (26) sont rectangulaires, en particulier carrées.

10. Coussin de levage d'aéronef selon l'une quelconque des revendications précédentes, **caractérisé par le fait que** les coussins individuels (26) présentent chacun une largeur et une profondeur situées dans le plan des surfaces principales (28, 30), qui sont au moins cinq fois, de préférence au moins dix fois supérieures à la hauteur d'un coussin individuel (26).

11. Coussin de levage d'aéronef selon l'une quelconque des revendications précédentes, **caractérisé par le fait que** chaque groupe de coussins (22, 24) comprend une pluralité de moyens de liaison (38) et que respectivement un moyen de liaison (38) d'un groupe de coussins (24) est situé, à l'état monté des groupes de coussins (22, 24), au-dessus de respectivement un moyen de liaison (38) du groupe de coussins (22) situé là-dessous.

12. Coussin de levage d'aéronef selon l'une quelconque des revendications précédentes, **caractérisé par le fait que** chaque coussin individuel (26) présente deux surfaces principales (28, 30) et des parois latérales, les parois latérales reliant les surfaces principales (28, 30) l'une à l'autre.

13. Coussin de levage d'aéronef selon l'une quelconque des revendications précédentes, **caractérisé par le fait que**, à l'état gonflé de groupes de coussins voisins et lorsque la pièce de couplage (44) de l'autre groupe de coussins est reliée à la contre-pièce de couplage (46) dudit un groupe de coussins, les éléments flexibles sont tendus.

14. Coussin de levage d'aéronef selon l'une quelconque des revendications précédentes, **caractérisé par le fait que** des languettes (52) qui reçoivent et guident un élément (42, 44) sont fixées sur les parois latérales (34) du coussin individuel (26).
